# EUROPÄISCHE PATENTSCHRIFT

(11) **EP 0 832 007 B1**
(45) Veröffentlichungstag und Bekanntmachung des Hinweises auf die Patenterteilung: **05.09.2001**
(21) Anmeldenummer: 96934632.9
(22) Anmeldetag: 11.10.1996
(51) Int. Cl.: B60N 2/10

(54) **Betätigungsvorrichtung zum Entriegeln einer Sperrklinke einer klappbaren Rückenlehne eines Kraftfahrzeugsitzes**
Actuator for releasing the locking catch of a folding backrest of a motor vehicle seat
Dispositif d'actionnement pour déverrouiller le cliquet d'arrêt du dossier rabattable d'un siège d'automobile

(30) Priorität: 23.01.1996 DE 19602211
(43) Veröffentlichungstag der Anmeldung: 01.04.1998
(73) Patentinhaber: Faurecia Autositze GmbH & Co. KG, 31655 Stadthagen (DE)
(72) Erfinder: WILHELM, Reinhard, D-31552 Rodenberg (DE); BESSELMANN, Norbert, D-31655 Stadthagen (DE)
(74) Vertreter: Patentanwälte Dipl.-Ing. Bodo Thielking Dipl.-Ing. Otto Elbertzhagen
(86) Internationale Anmeldenummer: EP9604419
(87) Internationale Veröffentlichungsnummer: WO9727074

(56) Entgegenhaltungen:
- EP-A- 0 306 374
- DE-A- 2 441 398
- FR-A- 2 563 716

## Beschreibung

### TECHNISCHES GEBIET

Die Erfindung betrifft eine Betätigungsvorrichtung zum Entriegeln einer Sperrklinke einer klappbaren, mit einer Neigungsverstellvorrichtung versehenen Rückenlehne eines Kraftfahrzeugsitzes nach dem Oberbegriff des Patentanspruchs 1.

### STAND DER TECHNIK

Bei derartigen Betätigungsvorrichtungen, die seit vielen Jahren in zweitürige Großserienfahrzeuge eingebaut werden, besteht das Problem, daß für den Schwenkweg des Betätigungshebels ein nur begrenzter Schwenkwinkel zur Verfügung steht. Dieser Schwenkwinkel kann ohne nachteilige Folgen für die Bedienungsqualität nicht vergrößert werden. Dabei erweist es sich als nachteilig, daß der ohnehin begrenzte zur Verfügung stehende Schwenkbereich, der den Betätigungsweg der Sperrklinke bestimmt, ohnehin nicht voll ausgenutzt werden kann. Die Ausnutzbarkeit des Schwenkwinkels wird dadurch verringert, daß die Rückenlehne nicht aus einer vorgegebenen festen Position in die vordere Stellung umgeklappt werden kann, sondern daß der Klappvorgang mit jeder der für die Benutzung denkbaren Neigungseinstellungen möglich sein muß. Tatsächlich wird ein beispielhafter Schwenkweg von 40° in seiner Wirkung um beispielsweise 10° verringert, weil die mit einer Neigungsverstellvorrichtung einstellbare Rückenlehnenneigung im Gebrauchszustand ohne weiteres um 60 oder mehr Grad variieren kann.

### DIE ERFINDUNG

Ausgehend von diesem Stand der Technik liegt der Erfindung die Aufgabe zugrunde, eine Betätigungsvorrichtung der als bekannt vorausgesetzten Art so auszubilden, daß der Stellweg des Betätigungshebels unabhängig von der eingestellten Grundneigung der Rückenlehne stets in vollem Umfang für die Betätigung der Sperrklinke ausnutzbar ist.

Die Lösung dieser Aufgabe erfolgt mit den Merkmalen des Kennzeichnungsteils von Anspruch 1.

Bevorzugte Ausgestaltungen der Erfindung sind in den Unteransprüchen beschrieben.

Das Vorsehen einer zusätzlichen Umlenkeinrichtung zwischen der unteren Umlenkstelle und der Sperrklinke hat zur Folge, daß der Umschlingungswinkel des Zugseils um die untere Umlenkstelle in jeder der Benutzungslagen, die durch den Verstellbereich der Neigungsverstellvorrichtung bestimmt werden, praktisch gleich ist. Es ändert sich also im Gegensatz zu der bekannten Lösung ohne zusätzliche Umlenkeinrichtung nicht der Umschlingungswinkel der unteren Umlenkstelle in Abhängigkeit von der für die Benutzung eingestellten Neigungsposition. Damit steht für das Entriegeln der Sperrklinke der gesamte vom Betätigungshebel erzeugte Verstellweg zur Verfügung.

### KURZBESCHREIBUNG DER ZEICHNUNGSABBILDUNG

Nachstehend wird eine bevorzugte Ausführungsform der Erfindung anhand der schematischen Zeichnungen erläutert. Es zeigen:
- Figur 1 -: eine schematische Seitenansicht einer Rückenlehne mit einem Adapter in einer extrem weit nach vorne geneigten Position,
- Figur 2 -: die Darstellung gemäß Figur 1 in Gebrauchslage der Rückenlehne,
- Figur 3 -: die Darstellung gemäß Figuren 1 und 2 bei weitestmöglich nach hinten geneigter Rückenlehne.

### BESTER WEG ZUR AUSFÜHRUNG DER ERFINDUNG

Eine schematisch mit 2 bezeichnete Rückenlehne trägt an ihrem oberen seitlichen Endbereich einen Betätigungshebel 4, der als einarmiger Hebel ausgebildet und um eine am seitlichen oberen Endbereich der Rückenlehne angeordnete Lagerstelle 5 verschwenkbar ist. An dem Betätigungshebel 4 ist ein Zugseil 3 befestigt, das etwa im Bereich der Rückenlehnenmitte durch ein Führungselement 8, beispielsweise eine Rolle, gegenüber seinem gestreckten Zustand nach vorn geführt ist. Das Zugseil 3 überläuft eine untere Umlenkstelle 6, die kreisförmig bzw. kreiszylindrisch ausgebildet ist und deren Mittelachse mit 7 bezeichnet ist. Die Mittelachse 7 fällt zumindest annähernd zusammen mit der Schwenkachse der Neigungsverstellvorrichtung bzw. der Schwenkachse, um die die Rückenlehne schwenkbar an einem Adapter 11 befestigt ist. Zwischen Adapter 11 und Rückenlehne 2 ist im Bereich der Schwenkachse 7 zumindest annähernd gleichachsig die nicht dargestellte Neigungsverstellvorrichtung vorgesehen, die beispielsweise ein bekanntes, weit verbreitetes Taumelgetriebe sein kann. Mit dieser Neigungsverstellvorrichtung wird die Grundneigung der Rückenlehne 2 gegenüber dem Adapter 11 eingestellt.

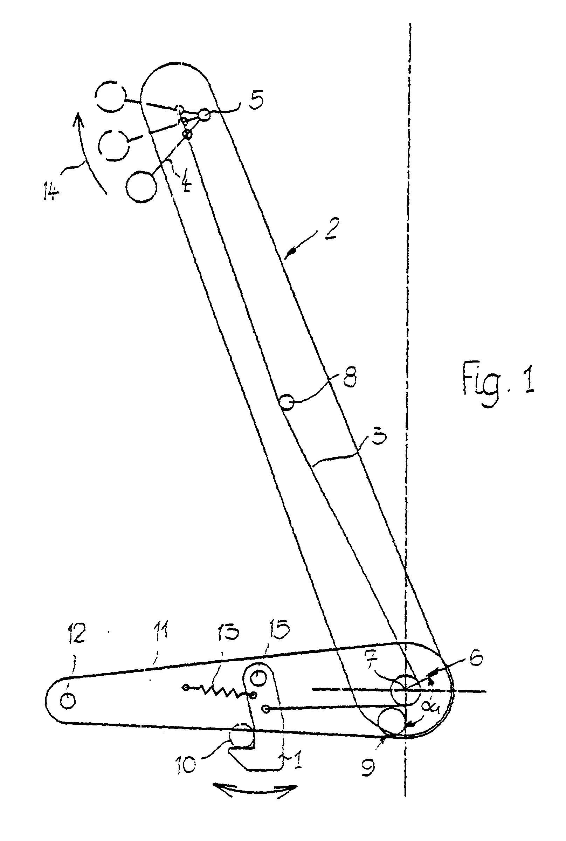

Der Adapter 11 wiederum ist um einen ersten Bolzen 12 klappbar, der den Adapter schwenkbar mit dem Sitz verbindet. Der Mittelpunkt des ersten Bolzens 12 bildet die Klappachse, um die der Adapter zusammen mit der Rückenlehne 2 verschwenkbar ist, wenn die Sperrklinke 1 gelöst ist. Die Sperrklinke 1 ist um einen zweiten Bolzen 15 schwenkbar gelagert und hintergreift im verriegelten Zustand einen Verriegelungsbolzen 10, der ebenfalls am nicht dargestellten Sitz fest ist. Eine Rückholfeder 13 zieht die Sperrklinke 1 stets in die in Figur 1 dargestellte Verriegelungsposition. Zum Entriegeln der Sperrklinke 1 wird der Betätigungshebel 4 aus einer durchgehend gezeichneten Grundstellung über die gestrichelte mittlere Stellung in die obere gestrichelte Endstellung in Richtung des Pfeils 14 gezogen. In der oberen gestrichelten Position hat die Sperrklinke 1 den Verriegelungsbolzen 10 freigegeben und es kann die Lehne 2 mittels des Adapters 11 um den Bolzen 12 nach vorn verschwenkt werden.

Die in Figur 1 dargestellte Neigungsposition ist eine extrem weit nach vorn verschwenkte Neigungsposition, die für den Transport sperriger Gegenstände hinter dem Beifahrersitz eingestellt werden kann. Erst in dieser außerhalb des eigentlichen Benutzungsbereichs liegenden extremen vorderen Neigungsstellung gemäß Figur 1 ist das Zugseil 3 im Bereich zwischen der unteren Umlenkstelle 6 und der Sperrklinke 1 gestreckt. In dieser Position liegt die zusätzliche untere Umlenkeinrichtung 9 nur noch gerade an dem gestreckten Zugseilbereich an.

Die untere Umlenkstelle 6 ist vorzugsweise ein zwischen den auf beiden Seiten der Rückenlehne 2 angeordneten Neigungsverstellvorrichtungen verlaufendes Übertragungsrohr.

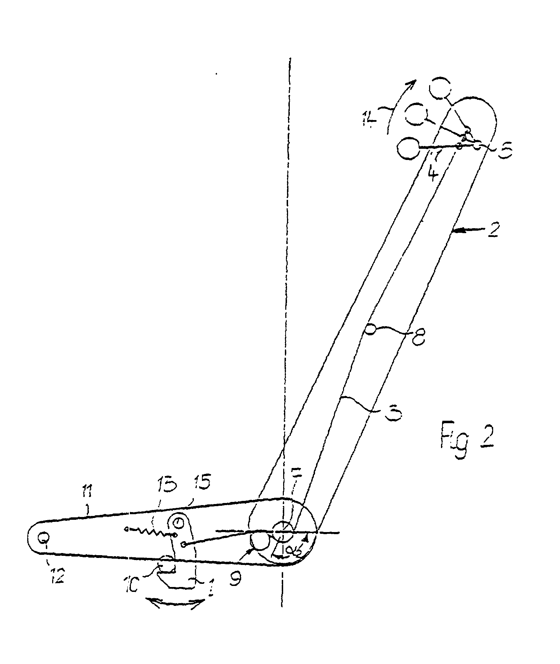

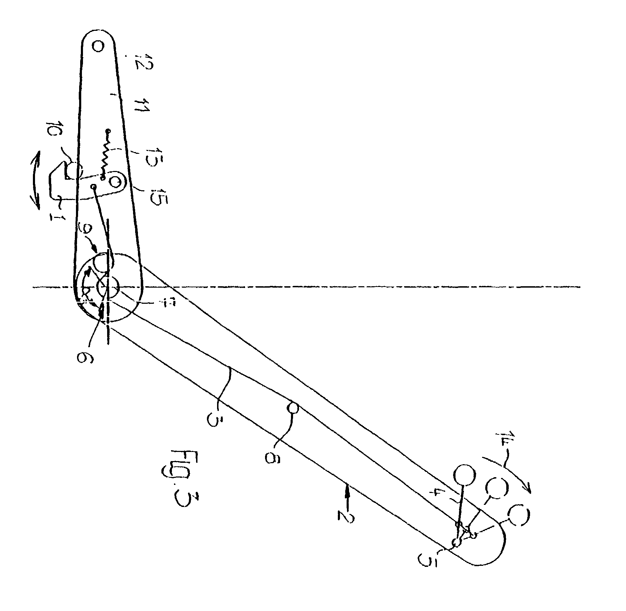

In allen anderen tatsächlichen Neigungszuständen der Rükkenlehne, welche praktischen Benutzungsfällen entsprechen, drückt die vorzugsweise als Umlenkrolle ausgebildete untere Umlenkeinrichtung 9 den horizontalen Zugseilbereich stets nach oben mit der Folge, daß sie den Umschlingungswinkel α₃ in Figur 3 und α₂ in Figur 2 gegenüber der gestreckten Lage vergrößert.

Erst bei der in Figur 1 dargestellten Extremposition, die die Grenze des Benutzungsbereichs markiert, hat die untere Umlenkeinrichtung 9 keine Wirkung mehr auf den dann gestreckten Verlauf des waagerechten Zugseilstücks. Der Umschlingungswinkel α₁ in dieser Extremposition ist gleich groß wie die Umschlingungswinkel α₂ und α₃.

## Patentansprüche

1. Betätigungsvorrichtung zum Entriegeln einer Sperrklinke (1) einer klappbaren, mit einer Neigungsverstellvorrichtung versehenen Rückenlehne (2) eines Kraftfahrzeugsitzes, welche ein Zugseil (3) aufweist, das einerseits an einem Betätigungshebel (4) befestigt ist, der um eine am seitlichen oberen Endbereich der Rückenlehne angeordnete Lagerstelle (5) schwenkbar ist und das andererseits an der Sperrklinke (1) angreift und auf seinem Weg vom Betätigungshebel (4) zur Sperrklinke (1) eine untere, zumindest teilweise kreisförmig ausgebildete Umlenkstelle (6) überläuft, deren Mittelachse (7) zumindest annähernd mit der Schwenkachse der Neigungsverstellvorrichtung bzw. der Rückenlehne (2) zusammenfällt,
**dadurch gekennzeichnet**,
daß eine zusätzliche Umlenkeinrichtung (9) zwischen der unteren Umlenkstelle (6) und der Sperrklinke (1) vorgesehen ist, die den Umschlingungswinkel der unteren Umlenkstelle im Benutzungszustand vergrößert gegenüber einem im Benutzungszustand der Rückenlehne gestreckten Zustand des Zugseils (3) zwischen unterer Umlenkstelle (6) und Sperrklinke (1).

2. Betätigungsvorrichtung nach Anspruch 1,
**dadurch gekennzeichnet**,
daß die zusätzliche Umlenkeinrichtung (9) eine Umlenkrolle ist.

3. Betätigungsvorrichtung nach Anspruch 1 oder 2,
**dadurch gekennzeichnet**,
daß die untere Umlenkstelle (6) ein zwischen den auf beiden Seiten der Rückenlehne angeordneten Neigungsverstellvorrichtungen verlaufendes Übertragungsrohr ist.

## Claims

1. Operating device for releasing a locking pawl (1) of a folding backrest (2) of a motor vehicle seat provided with a tilt adjustment device which has a pull cable (6) which on one side is fixed on an operating lever (4) which is able to swivel about a bearing point (5) mounted on the side upper end area of the backrest, and which on the other side engages on the locking pawl (1) and runs on its path from the operating lever (4) to the locking pawl (1) over a lower deflection point (6) formed at least circular in part, the centre axis (7) of which coincides at least approximately with the swivel axis of the tilt adjustment device or backrest (2), **characterised in that** an additional deflection device (9) is provided between the lower guide point (6) and locking pawl (1) which increases the contact angle of the lower deflection point in the use position compared to a stretched state of the pull cable (3) between the lower guide point (6) and locking pawl (1) in the use position of the backrest.

2. Operating device according to claim 1 **characterised in that** the additional deflection device (9) is a guide pulley.

3. Operating device according to claim 1 or 2 **characterised in that** the lower deflection position (6) is a transfer tube running between the tilt adjustment devices mounted on both sides of the backrest.

## Revendications

1. Dispositif d'actionnement pour déverrouiller le cliquet d'arrêt (1) du dossier rabattable (2) d'un véhicule automobile pourvu d'un système de réglage d'inclinaison, lequel dispositif présente un câble tracteur (3) qui, d'une part, est fixé à un levier d'actionnement (4) pivotant sur un point d'appui (5) situé dans une zone latérale, supérieure du dossier, et, d'autre part, attaque un cliquet d'arrêt (1), ce câble tracteur (3) passant, entre le levier d'actionnement (4) et le cliquet d'arrêt (1) sur un point de déflexion inférieur (6) au moins partiellement circulaire, dont l'axe central (7) coïncide, au moins approximativement, avec l'axe de pivotement du dispositif de réglage d'inclinaison resp. du dossier (2),
**caractérisé en ce**
**qu**'un déflecteur supplémentaire (9) est prévu entre le point de déflexion inférieur (6) et le cliquet d'arrêt (1), lequel contribue à agrandir l'angle d'enroulement du point de déflexion inférieur par rapport à celui infligé au câble tracteur (3) tendu entre le point de déflexion inférieur (6) et le cliquet d'arrêt (1) quand le dossier est en position d'utilisation.

2. Dispositif d'actiannement selon la revendication 1,
**caractérisé en ce que**
le dispositif de déflexion supplémentaire (9) est une poulie de renvoi.

3. Dispositif d'actionnement selon la revendication 1 ou 2,
**caractérisé en ce que**
le point de déflexion inférieur (6) est un dispositif de transmission tubulaire qui s'étend entre les dispositifs de réglage d'inclinaison disposés des deux côtés du dossier.
